# EUROPÄISCHE PATENTSCHRIFT

(11) **EP 0 746 713 B1**
(45) Veröffentlichungstag und Bekanntmachung des Hinweises auf die Patenterteilung: **01.09.1999**
(21) Anmeldenummer: 95909751.0
(22) Anmeldetag: 21.02.1995
(51) Int. Cl.: F16K 27/02

(54) **HYDRAULISCHES EINSATZVENTIL**
INSERT VALVE
SOUPAPE INSERABLE

(30) Priorität: 26.02.1994 DE 4406317; 16.03.1994 DE 4408929
(43) Veröffentlichungstag der Anmeldung: 11.12.1996
(73) Patentinhaber: Mannesmann Rexroth AG, 97816 Lohr am Main (DE)
(72) Erfinder: STELLWAGEN, Armin, D-97816 Lohr am Main (DE)
(86) Internationale Anmeldenummer: EP9500612
(87) Internationale Veröffentlichungsnummer: WO9523307

(56) Entgegenhaltungen:
- CH-A- 280 266
- DE-A- 2 449 443
- DE-A- 2 901 902
- FR-A- 2 251 759

## Beschreibung

Die Erfindung geht aus von einem hydraulischen Ventil, insbesondere von einem Druckbegrenzungsventil, das ein in einer Bohrung eines Aufnahmeteils einsetzbares Ventilgehäuse aufweist.

Ein Druckbegrenzungsventil mit einem in einer Bohrung eines Aufnahmeteils einsetzbaren, hülsenförmigen Ventilgehäuse ist bereits aus der DE-AS 20 07 329 bekannt. Das Ventilgehäuse besitzt einen mit einem Außengewinde versehenen Abschnitt, mit dem es in die Bohrung eingeschraubt ist. Dieser Abschnitt befindet sich unmittelbar am Beginn der Bohrung. Nach innen schließt sich an ihn ein weiterer Abschnitt des Ventilgehäuses an, an dem das Ventilgehäuse mit der Bohrung einen Ringraum bildet. Am Ende dieses Abschnitts ist am Ventilgehäuse ein Ventilsitz befestigt, der beim Einschrauben des Ventilgehäuses zwischen einem Absatz der Bohrung des Aufnahmeteils und dem Ventilgehäuse eingeklemmt wird und mit einer Dichtkante auf dem Absatz der Bohrung aufliegt. Durch die Dichtkante wird der Ringraum, der den Ablauf des Druckbegrenzungsventils darstellt, von dessen Zulauf getrennt. Sobald der Ventilsitz das Aufnahmeteil berührt, setzt er dem weiteren Einschrauben des Ventilgehäuses einen Widerstand entgegen. Es muß dann ein zusätzliches Drehmoment aufgebracht werden, das über das Ventilgehäuse auf den Ventilsitz zu übertragen ist.

Die DE-AS 20 07 329 zeigt außerdem, daß das Innere des Ventilgehäuses durch eine von hinten in das Ventilgehäuse eingeschraubte Verschlußschraube verschlossen ist. Durch die Verschlußschraube geht ein Gewindestift hindurch, mit dessen Hilfe ein Abstützkolben für die ein bewegliches Ventilglied beaufschlagende Ventilfeder verstellbar ist.

Ein hydraulisches Ventil mit den Merkmalen aus dem Oberbegriff des Anspruches 1 ist aus der DE 41 12 065 A1 bekannt. Bei diesem Ventil ist die Reihenfolge der verschiedenen Abschnitte des Ventilgehäuses in erste Linie durch die vorgegebene Lage des Ablaufkanals bedingt. Das Ventilgehäuse des bekannten Ventils ist hinten einstückig geschlossen und mit einem Sechskant versehen, mit dessen Hilfe es in das Aufnahmeteil ein- oder aus dem Aufnahmeteil ausgeschraubt werden kann. Insbesondere wenn nur wenig Bauraum zur Verfügung steht und das Ventilgehäuse dementsprechend dünnwandig ausgebildet wird, kann das Ventilgehäuse beim Schrauben hoch beansprucht, evt. dauernd verformt oder auch zertört werden.

Bei einem aus der CH-A-280 266 bekannten Ventil weist das Ventilgehäuse zwei Gehäuseteile auf, die zusammengeschraubt sind. Das eine Gehäuseteil befindet sich weit innen in einem Aufnahmeteil und besitzt zwei axial hintereinanderliegende Abschnitte, wobei der eine Abschnitt außen und der andere Abschnitt innen mit einem Gewinde versehen ist. Bei der Montage des Ventils am Aufnahmeteil wird zunächst dieses innere Gehäuseteil mit dem das Außengewinde tragenden Abschnitt in ein Gewindeloch einer sich im Inneren des Aufnahmeteils befindlichen Zwischenwand eingeschraubt. Dazu ist dieses Gehäuseteil im Bereich des Abschnitts mit Außengewinde innen vierkantig ausgebildet. In den Innenvierkant kann ein entsprechender Schlüssel eingesteckt werden, um das Gehäuseteil einzuschrauben. Insofern entspricht das innere Gehäuseteil einer versenkten Madenschraube oder einem kurzen, versenkten Ventilgehäuse.

Wenn das innere Gehäuseteil des Ventilgehäuses nach der CH-A 280 266 in das Aufnahmeteil eingeschraubt ist, wird das zweite, äußere Gehäuseteil, das im Innern einen den Zugang zum Innenvierkant des inneren Gehäuseteils versperrenden Ventilsitz aufweist, in das Aufnahmeteil eingeführt und mit einem ein Außengewinde tragenden Abschnitt in den das Innengewinde aufweisenden Abschnitt des inneren Gehäuseteils eingeschraubt. Dazu weist das äußere Gehäuseteil außerhalb des Aufnahmeteils einen axial weit von dem Abschnitt mit dem Außengewinde beabstandeten Außenmehrkant zum Ansetzen eines Schlüssels auf. Insofern gleicht das äußere Gehäuseteil völlig dem Ventilgehäuse gemäß der DE 41 12 065 A1.

Der Erfindung liegt die Aufgabe zugrunde, ein hydraulisches Ventil mit den Merkmalen aus dem Oberbegriff des Anspruchs 1 so weiterzuentwickeln, daß die Gefahr verringert ist, daß das Ventilgehäuse beim Eindrehen in das Aufnahmeteil oder beim Ausdrehen aus dem Aufnahmeteil beschädigt wird.

Diese Aufgabe wird für ein hydraulisches Ventil mit den Merkmalen aus dem Oberbegriff des Anspruchs 1 dadurch gelöst, daß der Innenraum des Ventilgehäuses im Bereich des dritten Abschnitts als Innenmehrkant ausgebildet ist und daß zur Verschraubung des Ventilgehäuses mit dem Aufnahmeteil der Innenmehrkant durch den ersten Abschnitt und den zweiten Abschnitt des Ventilgehäuses hindurch für ein Werkzeug zugänglich ist. Bei einem erfindungsgemäßen hydraulischen Ventil wird also das Drehmoment nicht von einem vom Gewinde axial beabstandeten Mehrkant über das Ventilgehäuse auf das Gewinde übertragen. Vielmehr befindet sich der Mehrkant, axial gesehen, im Bereich des Gewindes, so daß das Ventilgehäuse beim Eindrehen oder Ausdrehen nicht besonders beansprucht wird und deshalb auch in platzsparender Weise sehr dünnwandig gebaut sein kann.

Vorteilhafte Ausgestaltungen eines erfindungsgemäßen hydraulischen Ventils kann man den Unteransprüchen 2 bis 10 entnehmen.

So ist gemäß Anspruch 2 vorteilhafterweise ein bewegliches, an seinem in Einschraubrichtung weisenden Ende mit einem Ventilsitz zusammenwirkendes Ventilglied in dem Innenmehrkant geführt. Bei einer Ausbildung gemäß Anspruch 3 werden neben der Führung auch Freiräume zwischen dem Ventilglied und dem Ventilgehäuse erhalten, die vorteilhafterweise im Ablaufströmungspfad des Ventils liegen.

Eine Weiterbildung gemäß Anspruch 4 ist vor allem für das Herausschrauben des Ventilgehäuses aus dem Aufnahmeteil von Vorteil. Es kann nämlich nur ein Werkzeug am Innensechskant angesetzt werden, ohne daß vorher das bewegliche Ventilglied aus dem Ventilgehäuse herauszuholen ist.

Wegen der nur geringen Beanspruchung des Ventilgehäuses kann dessen Außendurchmesser im zweiten Abschnitt kleiner sein als im ersten und dritten Abschnitt, um dadurch auch bei beengten Platzverhältnissen einen genügend großen Ringraum zu schaffen.

Ein Ventilsitz, mit dem ein bewegliches Ventilglied zusammenwirkt, kann sich im Aufnahmeteil befinden. Er kann jedoch auch ortsfest am Ventilgehäuse angeordnet sein. Wenn er an einem separaten Ventilsitzteil ausgebildet ist, ist im letzteren Fall eine teilweise Vormontage des Ventils möglich. Gemäß Anspruch 8 wird in letzterem Falle das Ventilgehäuse bevorzugt bis zu seiner oder eines separaten Ventilsitzteils dichten Anlage am Aufnahmeteil in dieses eingeschraubt. Auf diese Weise kann kein Öl an den ineinandergreifenden Gewinden am Ventilgehäuse und am Aufnahmeteil entlangkriechen. Befindet sich der Ventilsitz an einem separaten Ventilsitzteil und liegt dieses dicht am Aufnahmeteil an, so kann auch nicht zwischen dem Ventilsitzteil und dem Ventilgehäuse hindurch Öl vom unter Hochdruck stehenden Zulauf des Ventils zum Ablauf gelangen.

Ein als Druckbegrenzungsventil ausgebildetes Ausführungsbeispiel eines erfindungsgemäßen hydraulischen Ventils ist in der Zeichnung dargestellt. Anhand der Figuren dieser Zeichnung wird die Erfindung nun näher erläutert.

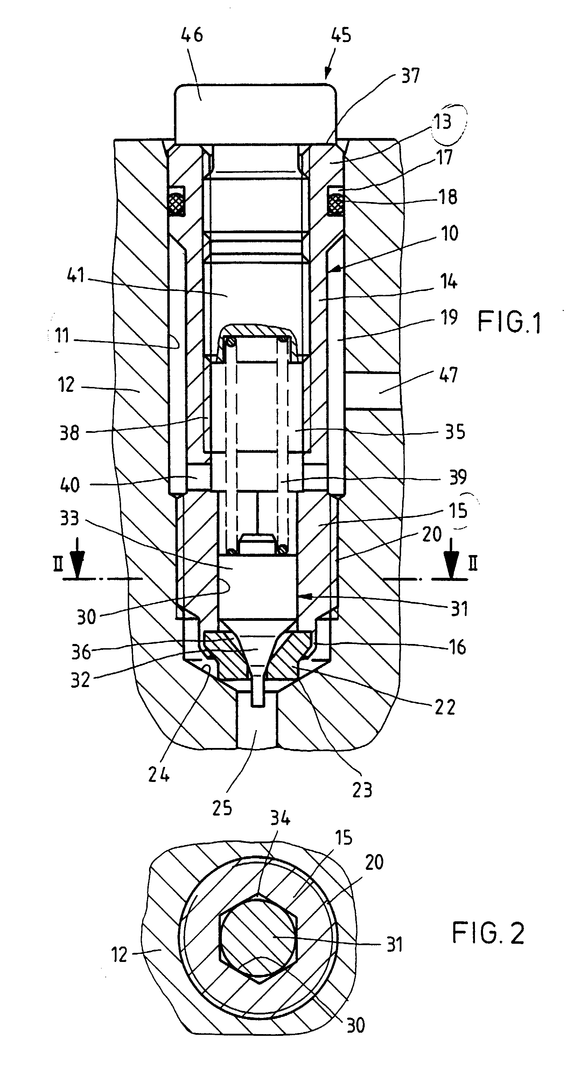

Es zeigen
Figur 1 einen Längsschnitt durch das Ausführungsbeispiel und
Figur 2 einen Schnitt entlang der Linie II-II aus Figur 1.

Das hülsenförmige Ventilgehäuse 10 des Ausführungsbeispiels ist aus einem Rohr gefertigt, das als Halbzeug angeliefert wird, innen und außen einen kreisförmigen Querschnitt hat und verschiedenen Arbeitsschritten unterworfen wird. Es ist Teil eines Druckbegrenzungsventils und in eine Sackbohrung 11 einer Steuerplatte 12 eingesetzt. An ihm lassen sich vier in axialer Richtung hintereinanderliegende Gehäuseabschnitte 13, 14, 15 und 16 erkennen, die anhand ihrer Außenkontur und ihrer Funktion voneinander unterschieden seien. Im ersten Gehäuseabschnitt 13, der sich am wenigsten weit in der Sackbohrung 11 befindet und deshalb als hinten befindlich bezeichnet wird, hat das Ventilgehäuse 10 eine zylindrische Außenfläche, deren Durchmesser nur geringfügig kleiner als der dortige Durchmesser der Sackbohrung 11 ist und die lediglich durch eine Ringnut 17 unterbrochen ist, in die ein O-Ring 18 eingelegt ist.

Nach innen hin schließt sich an den Gehäuseabschnitt 13 der zweite Gehäuseabschnitt 14 an, in dem die Außenfläche des Ventilgehäuses 10 ebenfalls kreiszylindrisch ist, wobei jedoch bei gleichbleibendem Druchmesser der Sackbohrung 11 wie im Bereich des ersten Gehäuseabschnitts 13 der Außendurchmesser des Ventilgehäuses 10 kleiner ist, so daß im Bereich des zweiten Gehäuseabschnitts 14 zwischen dem Ventilgehäuse 10 und der Sackbohrung 11 ein Ringraum 19 besteht.

In dem folgenden Gehäuseabschnitt 15 ist das Ventilgehäuse 10 mit einem Außengewinde 20 versehen, dessen Außendurchmesser kleiner ist als der Durchmesser des Ventilgehäuses 10 im Gehäuseabschnitt 13 und dessen Kerndurchmesser größer ist als der Durchmesser des Ventilgehäuses 10 im Gehäuseabschnitt 14. Mit dem Gehäuseabschnitt 15 kann das Ventilgehäuse 10 in die Sackbohrung 11 eingeschraubt werden, die dazu mit einem Innengewinde mit an das Außengewinde 20 des Ventilgehäuses 10 angepaßten Durchmessern versehen ist.

Der am weitesten vorne befindliche Gehäuseabschnitt 16 besitzt wiederum ein kreiszylindrische Außenfläche, deren Durchmesser wesentlich kleiner als der Kerndurchmesser des Außengewindes 20 ist. In dem Gehäuseabschnitt 16 besitzt das Ventilgehäuse 10 eine axial offene kreizylindrische Ausnehmung, in die ein separat gefertigter Ventilsitz 22 eingesetzt ist. Im Bereich der Ausnehmung ist die Materialstärke des Ventilgehäuses 10 radial gesehen so gering, daß das Material über den Ventilsitz 22 umgebördelt werden kann, so daß dieser fest am Gehäuse 10 gehalten ist. Das Ventilgehäuse 10 wird soweit in die Steuerplatte eingeschraubt, daß der über das vordere Ende des Ventilgehäuses 10 vorstehende Ventilsitz 22 mit einer Dichtkante 23 fest gegen einen Kegel 24 am Grunde der Sackbohrung 11 gedrückt wird. Dadurch wird verhindert, daß vom axial in die Sackbohrung 11 mündenden Zulaufkanal 25 des Druckbegrenzungsventils Hydrauliköl zwischen dem Ventilsitz 22 und dem Ventilgehäuse 10 hindurch in das Innere des Ventilgehäuses 10 und am Außengewinde 20 entlang in den Ringraum 19 gelangt und dadurch die einwandfreie Funktion des Druckbegrenzungsventils beeinträchtigt wird.

Um für das Einschrauben des Ventilgehäuses in die Steuerplatte 12 oder für das Ausschrauben aus dieser ein Werkzeug ansetzen zu können, ist das Ventilgehäuse 10 mit einem Innensechskant 30 versehen. Dieser befindet sich im Bereich des Gehäuseabschnitts 15, also im Bereich des Außengewindes 20 des Ventilgehäuses 10. Die über das Werkzeug eingeleitete Kraft wird also unter Umgehung der Gehäuseabschnitte 13 und 14 direkt in den Gehäuseabschnitt 15 und somit nahe an den Stellen eingeleitet, wo ein Widerstandsmoment gegen das Drehen entsteht. Der Weg des Werkzeugs nach innen wird durch den Ventilsitz 22 begrenzt. Die Kegelfläche 24 kann nicht beschädigt werden. Die Zweistückigkeit von Ventilgehäuse 10 und Ventilsitz 22 bringt nicht nur mit sich, daß für das jeweilige Teil das geeignetste Material verwendet werden kann, sondern auch, daß der Innensechskant 30 vor der Montage des Ventilsitzes 22 am Ventilgehäuse 10 durchgängig geformt werden kann.

Von dem Innensechskant 30 ist ein bewegliches Ventilglied 31, das mit einem Kegel 32 mit dem Ventilsitz 22 zusammenwirkt, mit einem kreiszylindrischen Abschnitt 33, dessen Durchmesser geringfügig kleiner als der Abstand zweier zueinander paralleler Flächen des Innensechskants 30 ist, axial geführt. In den Ecken des Innensechskants 30 sind zwischen diesem und dem Ventilglied 31 Freiräume 34 vorhanden, über die der hinter dem Ventilglied 31 befindliche Innenraum 35 mit dem Ringraum 36 zwischen dem Ventilglied 31 und dem Ventilsitz 22 verbunden ist.

Der Innenmehrkant 30 geht, zumindest wenn das bewegliche Ventilglied 31 auf dem Ventilsitz 22 aufsetzt, nach hinten über das dem Ventilsitz 22 abgelegene, hintere Ende des Ventilglieds 31 hinaus, so daß auch dann am Innensechskant 30 ein Werkzeug angesetzt werden kann, wenn sich das Ventilglied 31 im Ventilgehäuse 10 befindet. Dies ist vor allem vorteilhaft, wenn das Ventilgehäuse aus der Steuerplatte 12 herausgeschraubt werden soll, da dann nicht vorher das Ventilglied aus dem Ventilgehäuse herauszuholen ist. Grundsätzlich kann sich wegen des langen Innensechskants das Ventilglied auch beim Einschrauben des Ventilgehäuses schon in diesem befinden.

Der Innenraum 35 des Ventilgehäuses 10 ist von der dem Ventilsitz 22 abgelegenen Stirnseite 37 des Ventilgehäuses her mit einem Innengewinde 38 versehen. Zwischen einer in den Innenraum 35 eingeschraubten Einstellschraube 41 und dem Ventilglied 31 ist eine Schraubendruckfeder 39 eingespannt, deren Vorspannung mit der Schraube 41 eingestellt werden kann, um den Druck im Zulauf 25 zu bestimmen, bei dem das gezeigte Druckbegrenzungsventil anspricht. Der Federraum ist über zwei einander diametral gegenüberliegende Radialbohrungen 40 des Ventilgehäuses 10 mit dem Ringraum 19 verbunden. Um den Innenraum 35 nach hinten leckölfrei abzudichten und um zu verhindern, daß in mehr oder weniger spielerischer Weise an der Einstellschraube 41 herumgedreht wird, ist in das Ventilgehäuse 10 von hinten zusätzlich eine Verschlußschraube 45 eingeschraubt, die mit einem Kopf 46 die Stirnseite 37 des Ventilgehäuses 10 übergreift und eine nicht näher dargestellte Axialdichtung auf die Stirnseite 37 aufdrückt.

Bei der Herstellung des gezeigten Druckbegrenzungsventils wird nach der Fertigung der Einzelteile zunächst der Ventilsitz 22 am Ventilgehäuse 10 befestigt, ehe die Baueinheit aus diesen beiden Teilen in die Sackbohrung 11 des Aufnahmeteils 12 eingeschraubt wird. Beim Einschrauben wird mit einem Sechskant von hinten durch das Innere des Ventilgehäuses 10 nach vorne bis zu dem Innensechskant 30 gegriffen, um das einzuleitende Drehmoment auf das Ventilgehäuse 10 zu übertragen. Nach dem Eindrehen werden das Ventilglied 31 und die Schraubendruckfeder 39 in das Innere des Ventilgehäuses eingebracht. Dann wird die Schraube 41 eingeschraubt und die gewünschte Vorspannung der Schraubendruckfeder 39 eingestellt. Zuletzt wird das Innere des Ventilgehäuses 10 mit der Schraube 45 verschlossen.

Solange der hydraulische Druck im Zulaufkanal 25 eine auf das Ventilglied 31 wirkende Kraft erzeugt, die kleiner als die Kraft der Druckfeder 39 ist, wird der Ventilsitz 22 vom Ventilglied 31 beaufschlagt. Das Druckbegrenzungsventil ist geschlossen. Übersteigt die vom hydraulischen Druck erzeugte Kraft die Federkraft, so hebt das Ventilglied 31 vom Ventilsitz 22 ab. Druckmedium kann zwischen dem Ventilsitz 22 und dem Ventilglied 31 hindurchströmen und gelangt über die Freiräume 34 in den Federraum. Von dort strömt es durch die Radialbohrungen 40 in den Ringraum 19, aus dem das Druckmittel über einen Kanal 47 ablaufen kann.

Erfindungsgemäß wird das Drehmoment zum Ein- und Ausschrauben des Ventilgehäuses 10 direkt in den sich tief in der Sackbohrung 11 befindlichen, mit dem Außengewinde 20 versehenen Gehäuseabschnitt 15 eingeleitet. Das Gehäuse kann deshalb sehr dünnwandig ausgebildet sein, so daß eine sehr raumsparende Bauweise erhalten wird. Im übrigen muß das Ventilgehäuse 10 nicht über die Steuerplatte 12 vorstehen, weil kein Schraubenkopf mit einem Außenmehrkant an ihm ausgebildet zu sein braucht. Es ist auch denkbar, auf ein Dichtelement im Bereich des Gehäuseabschnitts 13 oder sogar ganz auf diesen Gehäuseabschnitt zu verzichten und den Ringraum 19 mit Hilfe der Verschlußschraube 45 abzudichten. Eine radiale Abdichtung zwischen der Steuerplatte 12 und der Verschlußschraube 45 wäre möglich, wenn diese in die Steuerplatte 12 eingesenkt wäre. Für eine axiale Abdichtung zwischen der Steuerplatte 12 und der Verschlußschraube 45 müßte die Verschlußschraube mit ihrem Kopf 46 über das Ventilgehäuse 10 hinaus über die Steuerplatte 12 greifen.

## Patentansprüche

1. Hydraulisches Ventil, insbesondere Druckbegrenzungsventil, mit einem in eine Bohrung (11) eines Aufnahmeteils (12) mit vorgegebener Einschraubrichtung einsetzbaren, hülsenförmigen Ventilgehäuse (10), das einstückig einen ersten Abschnitt (13), an dem es zur Bohrung (11) hin abdichtbar ist, einen in Einschraubrichtung vor dem ersten Abschnitt (13) befindlichen, zweiten Abschnitt (14), an dem es mit der Bohrung (11) einen Ringraum (19) bilden kann, und einen in Einschraubrichtung vor dem zweiten Abschnitt (14) befindlichen, dritten Abschnitt (15) aufweist, an dem es zur Verschraubung mit dem Aufnahmeteil (12) mit einem Außengewinde (20) versehen ist, **dadurch gekennzeichnet**, daß der Innenraum (35) des Ventilgehäuses (10) im Bereich des dritten Abschnitts (15) als Innenmehrkant (30) ausgebildet ist und daß zur Verschraubung des Ventilgehäuses (10) mit dem Aufnahmeteil (12) der Innenmehrkant (30) durch den ersten Abschnitt (13) und den zweiten Abschnitt (14) des Ventilgehäuses (10) hindurch für ein Werkzeug zugänglich ist.

2. Hydraulisches Ventil nach Anspruch 1, **dadurch gekennzeichnet**, daß ein bewegliches, an seinem in Einschraubrichtung des Ventilgehäuses (10) weisenden Ende mit einem Ventilsitz (22) zusammenwirkendes Ventilglied (31) in dem Innenmehrkant (30) geführt ist.

3. Hydraulisches Ventil nach Anspruch 2, **dadurch gekennzeichnet**, daß der Innenmehrkant (30) ein gleichseitiger Mehrkant ist und daß das Ventilglied (31) mit einem kreiszylindrischen Abschnitt (33) in dem Innenmehrkant (30) geführt ist.

4. Hydraulisches Ventil nach Anspruch 2 oder 3, **dadurch gekennzeichnet**, daß der Innenmehrkant (30) bei auf dem Ventilsitz (22) aufsitzendem Ventilglied (31) entgegen der Einschraubrichtung des Ventilgehäuses (10) über das Ventilglied (31) hinausreicht.

5. Hydraulisches Ventil nach einem vorhergehenden Anspruch, **dadurch gekennzeichnet**, daß der Außendurchmesser des Ventilgehäuses (10) im zweiten Abschnitt (14) kleiner ist als im ersten Abschnitt (13) und im dritten Abschnitt (15).

6. Hydraulisches Ventil nach einem vorhergehenden Anspruch, **dadurch gekennzeichnet**, daß ein mit einem beweglichen Ventilglied (31) zusammenwirkender Ventilsitz (22) als separates Teil am Ventilgehäuse (10) gehalten ist.

7. Hydraulisches Ventil nach Anspruch 6, **dadurch gekennzeichnet**, daß das Ventilsitzteil (22) entgegen der Einschraubrichtung des Ventilgehäuses (10) in eine Aufnahme des Ventilgehäuses (10) eingesetzt und durch einen wenigstens stellenweise umgebördelten Kragen des Ventilgehäuses (10) in der Aufnahme gehalten ist.

8. Hydraulisches Ventil nach einem vorhergehenden Anspruch, **dadurch gekennzeichnet**, daß ein mit einem beweglichen Ventilglied (31) zusammenwirkender Ventilsitz (22) ortsfest am Ventilgehäuse (10) angeordnet ist und daß das Ventilgehäuse (10) bis zu seiner oder eines separaten Ventilsitzteils (22) dichten Anlage am Aufnahmeteil (12) in dieses eingeschraubt ist.

9. Hydraulisches Ventil nach einem vorhergehenden Anspruch, **dadurch gekennzeichnet**, daß ein mit einem beweglichen Ventilglied (31) zusammenwirkender Ventilsitz (22) ortsfest am Ventilgehäuse (10) angeordnet ist und daß sich eine im Ventilgehäuse (10) befindliche und das Ventilglied (31) in Schließrichtung beaufschlagende Druckfeder (39) an einer verschieden weit in das Ventilgehäuse (10) einschraubbaren Stellschraube (41) abstützt.

10. Hydraulisches Ventil nach Anspruch 9, **dadurch gekennzeichnet**, daß in Einschraubrichtung des Ventilgehäuses(10) eine Verschlußschraube (45) in das Ventilgehäuse (10) eingeschraubt ist.

## Claims

1. A hydraulic valve, in particular a pressure limiting valve, with a sleeve-shaped valve housing (10) capable of being inserted in a predetermined screw-in direction into a bore (11) of a mating female mounting part (12), the said housing having in one piece a first section (13) at which it can be sealed off from the bore (11), a second section (14) beyond the first section (13) in the screw-in direction at which it can form an annular chamber (19) with the bore (11), and a third section (15) beyond the second section (14) in the screw-in direction at which it is provided with a male thread (20) for screwing into the female mounting part (12), **characterized in that** the interior (35) of the valve housing (10) is developed as polygonal socket (30) in the region of the third section (15), and that the polygonal socket (30) is accessible to a tool passing through the first section (13) and the second section (14) of the valve housing (10) for the purpose of screwing the valve housing (10) into the female mounting part (12).

2. A hydraulic valve according to Claim 1, **characterized in that** a movable valve element (31), which interacts with a valve seat (22) at its end facing the screw-in direction of the valve housing (10), is guided in the polygonal socket (30).

3. A hydraulic valve according to Claim 2, **characterized in that** the polygonal socket (30) is an equal-sided polygon and that the valve element (31) with a circular cylindrical section (33) is guided in the polygonal socket (30).

4. Hydraulic valve according to Claim 2 or 3, **characterized in that**, when the valve element (31) is in contact with the valve seat (22), the polygonal socket (30) projects beyond the valve element (31) in the direction opposite to the screw-in direction of the valve housing (10).

5. A hydraulic valve according to any of the preceding claims, **characterized in that** the outer diameter of the valve housing (10) is smaller in the second section (14) than in the first section (13) and the third section (15).

6. A hydraulic valve according to any of the preceding claims, **characterized in that** a valve seat (22) interacting with a movable valve element (31) is held as a separate part within the valve housing (10).

7. A hydraulic valve according to Claim 6, **characterized in that** the valve seat part (22) is inserted in a mounting portion within the valve housing (10) in the direction opposite to the screw-in direction of the valve housing (10) and is held in the mounting portion by an at least partially bent collar of the valve housing (10).

8. A hydraulic valve according to any of the preceding claims, **characterized in that** a valve seat (22) interacting with a movable valve element (31) is immovably fixed in position within the valve housing (10) and that the valve housing (10) is screwed into the female mounting part (12) until the valve housing (10), or a separate valve seat part (22), seals tightly against the said female mounting part.

9. A hydraulic valve according to any of the preceding claims, **characterized in that** a valve seat (22) interacting with a movable valve element (31) is immovably fixed in position within the valve housing (10), and that a compression spring (39) arranged within the valve housing (10) and acting on the valve element (31) in the closing direction rests against an adjusting screw that can be screwed in to a variable depth within the valve housing (10).

10. A hydraulic valve according to Claim 9, **characterized in that** a screw plug (45) is screwed into the valve housing (10) in the screw-in direction of the valve housing (10).

## Revendications

1. Une valve hydraulique, en particulier un limiteur de pression, dotée d'un corps (10) de valve en forme de douille, pouvant être inséré avec un sens de vissage donné dans un forage (11) d'un élément (12) de positionnement, lequel corps présente dans une seule pièce une première section (13), au niveau de laquelle il peut être relié au forage (11) par un joint étanche, une deuxième section (14) située devant la première section (13) dans le sens de vissage, au niveau de laquelle il peut former une chambre (19) annulaire avec le forage (11), et une troisième section (15) située devant la deuxième section (14) dans le sens de vissage, au niveau de laquelle il est pourvu d'un filetage (20) extérieur destiné au vissage dans l'élément (12) de positionnement, **caractérisée en ce que** la chambre (35) intérieure du corps (10) de valve au niveau de la troisième section (15) est conçue avec un segment (30) à plusieurs pans creux et que, afin de permettre le vissage du corps (10) de valve dans l'élément (12) de positionnement, le segment (30) à plusieurs pans creux est accessible à un outil en passant au travers de l'intérieur de la première section (13) et de la deuxième section (14) du corps (10) de valve.

2. Une valve hydraulique conforme à la revendication n° 1, **caractérisée en ce que** un élément (31) de valve mobile, dont l'extrémité orientée dans le sens de vissage du corps (10) de valve fonctionne avec un siège (22) de clapet, est guidé à l'intérieur du segment (30) à plusieurs pans creux.

3. Une valve hydraulique conforme à la revendication n° 2, **caractérisée en ce que** les pans du segment (30) à plusieurs pans creux sont identiques et que l'élément (31) de valve, au niveau d'un segment (33) cylindrique à section circulaire, est guidé à l'intérieur du segment (30) à plusieurs pans creux.

4. Une valve hydraulique conforme à la revendication n° 2 ou n° 3, **caractérisée en ce que**, lorsque l'élément (31) de valve est en butée contre le siège (22) de clapet, le segment (30) à plusieurs pans creux dépasse vers l'extérieur par rapport à l'élément (31) de valve, dans le sens opposé au sens de vissage du corps (10) de valve.

5. Une valve hydraulique conforme à une revendication précédente, **caractérisée en ce que** le diamètre extérieur de la deuxième section (14) du corps (10) de valve est inférieur à ceux de la première section (13) et de la troisième section (15).

6. Une valve hydraulique conforme à une revendication précédente, **caractérisée en ce que** un siège (22) de clapet. fonctionnant avec un élément (31) de valve, est maintenu sous forme d'élément distinct contre le corps (10) de valve.

7. Une valve hydraulique conforme à la revendication n° 6, **caractérisée en ce que** l'élément siège (22) de clapet est inséré dans une section de positionnement du corps (10) de valve. dans le sens opposé au sens de vissage du corps (10) de valve, et est maintenu dans la section de positionnement par une collerette du corps (10) de valve, laquelle est repliée au moins par endroits.

8. Une valve hydraulique conforme à une revendication précédente, **caractérisée en ce que** un siège (22) de clapet fonctionnant avec un élément (31) de valve mobile est disposé de façon fixe contre le corps (10) de valve et que le corps (10) de valve est inséré par vissage dans l'élément (12) de positionnement jusqu'à être, lui ou une section du siège (22) distinct, ajusté de façon étanche contre cet élément.

9. Une valve hydraulique conforme à une revendication précédente, **caractérisée en ce que** un siège (22) de clapet fonctionnant avec un élément (31) de valve mobile est disposé de façon fixe contre le corps (10) de valve et qu'un ressort (39) de pression, disposé à l'intérieur du corps (10) de valve et sollicitant l'élément (31) de valve dans le sens de la fermeture, prend appui contre une vis (41) de réglage, laquelle peut être vissée plus ou moins loin dans le corps (10) de valve.

10. Une valve hydraulique conforme à la revendication n°9, **caractérisée en ce que** une vis (45) de fermeture est vissée dans le corps (10) de valve, dans le sens de vissage du corps (10) de valve.
